Europäisches Patentamt

European Patent Office

Office européen des brevets

(11) Publication number: **0 248 504**
**A1**

(12) **EUROPEAN PATENT APPLICATION**

(21) Application number: **87201071.5**

(22) Date of filing: **05.06.87**

(51) Int. Cl.⁴: **G01F 23/24**

(30) Priority: **06.06.86 NL 8601472**

(43) Date of publication of application:
**09.12.87 Bulletin 87/50**

(84) Designated Contracting States:
**AT BE CH DE ES FR GB GR IT LI LU NL SE**

(71) Applicant: **Ferro Electronic B.V.**
**Bremstraat 1**
**NL-7011 AT Gaanderen(NL)**

(72) Inventor: **Aalders, Louis**
**Van Wassenaerweg 7**
**NL-7491 CA Delden(NL)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **System for measuring the filling height of material present in a tank and a sensor for use thereby.**

(57) The present invention provides a system for measuring the filling height of material present in a tank, in which a resistance path is formed on an enamelled metal plate constituting a rigid carrier, whereby there is provided a measuring system which is economic in production and can stand up well against mechanized vibrations, so it will be applicable in practice at e.g. measuring the amount of fuel present in a tank of an automobile.

EP 0 248 504 A1

## System for measuring the filling height of material present in a tank and a sensor for use thereby.

The present invention relates to a system for measuring the filling height of a tank, according to the preamble of claim 1.

Such a measuring system is known from USA-3.479.875. The rigid carrier provides a system that is not sensitive to mechanical vibrations. This known measuring system needs a cumbersome method of manufacture, including providing resistance ribbons on a thermistor material. On top of those ribbons, conductors are to be screen printed.

The present invention provides a measuring system which can easily be manufactured by means of one screen printing operation step, whereby there is provided an inexpensive measuring system which will in practice be applicable for tanks of e.g. automobiles.

This is achieved as described in the characterizing part of claim 1.

Preferably the resistance path is heated by means of an electrical current as has proved useful for enhancing the accuracy of the measuring system.

In USA-3.479.875 there is disclosed a system comprising a separate resistance path for heating. By the present invention there is provided a measuring system that can suffice with only one resistance path.

The preferred embodiments of a measuring system can also easily be designed and screen printed in one operation for a wide range of applications for tanks having all sorts of dimensions in all sorts of different circumstances.

In addition the present invention provides a sensor for use in a measuring system.

Further advantages, features and details of the invention will become apparent with reference to a drawing of a preferred embodiment thereof.

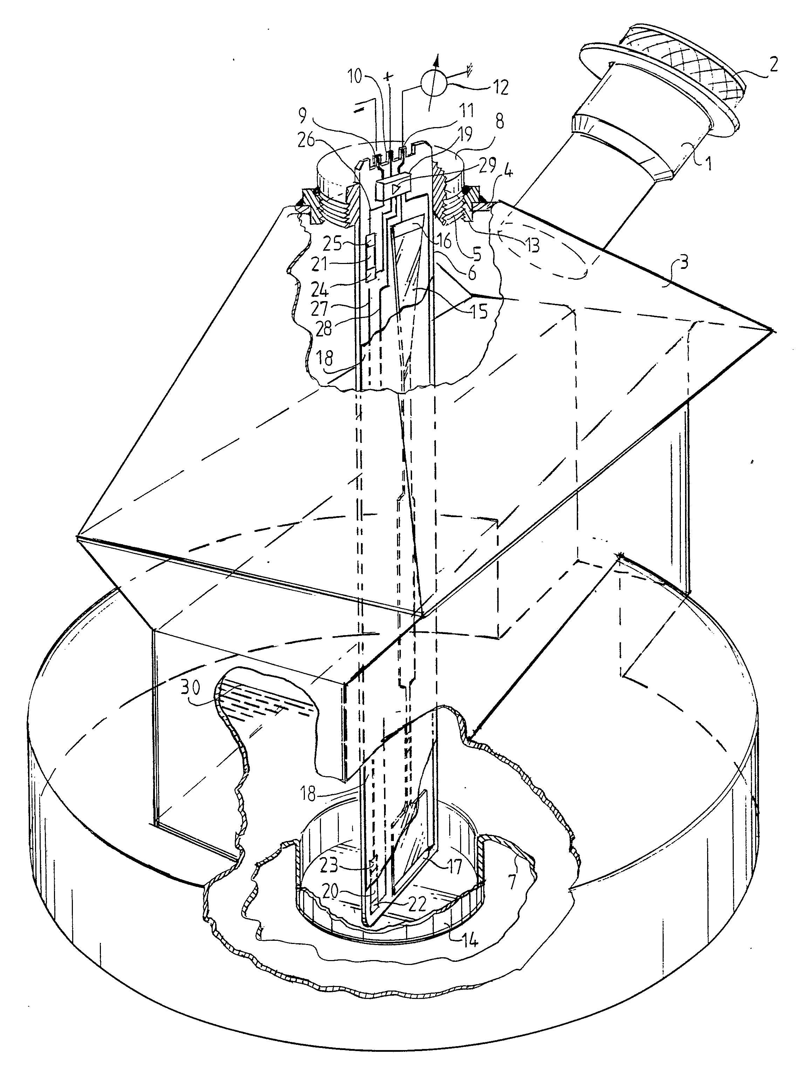

Shown in the figure is a perspective and partly broken away view of a fuel tank 3 of an automobile (not shown) provided with a filling connection 1 having a cover 2 on it, the shape of the tank often not being uniform owing to the space available in the body of the automobile. Using a screw thread 5 an at least partly ceramic, rigid carrier 6 is screw fastened to the upper part 4 of tank 3 down to the bottom 7 of the tank. Carrier 6 is guided through a screw cap 8 so that electrical connections 9, 10 and 11 can be connected from outside the tank. For example the negative supply voltage is connected to connection 9, 10 and 11 can be connected from outside the tank. For example the negative supply voltage is connected to connection 9, the positive supply voltage to connection 10 and an indicator element 12 that can be accommodated in the dashboard (not shown) is connected to connection 11. Screw cap 8 is screwed into a bush 13 provided with screw thread that is welded onto the upper part 4 of tank 3. Accommodated on the bottom 7 of tank 3 is a round locating part 14 protruding downwards which accomodates the carrier 6 during screw fastening. Such locating means can of course also be formed by a flat tank bottom having a locating edge placed on it.

Carrier 6 is rigid and can stand up well to mechanical vibrations, comprises at least one ceramic part and is preferably an enamelled metal plate, so-called PEMS i.e. Porcelain Enamelled Steel Substrate. So-called ELPOR® enamel which produces good insulation, is used here. The carrier can also consist of non-conducting rigid plastic material.

Using screen print technique an electrical resistance path 15 which is provided with electrical connections 16 and 17, for example of copper, is formed integrally with the ceramic part of the enamel layer from paste preferably having a high coefficient of temperature, for example the pastes 850-N and 850-P from the Ferro SENSOHM range. A thin protective layer 18 can be applied over the resistance path 15, which is then protected against chemical action of the material present in the tank.

The rigid carrier 6 and the resistance path 15 together form a sensor, whereby the resistance path 15 can be adapted to the interior dimensions and the form of the tank 3 such that the variation of the resistance value of the resistance path is in linear proportion to the change in the volume of the material present in the tank. If at a filling height 30 the level of liquid in the tank 3 has a certain area, the width of the resistance path 15 at that filling height is adapted to that area, since for example if that area is relatively small, when there is a change in that filling height there has to be a corresponding, comparatively small change in in the resistance value of the resistance path 15 and the resistance path 15 must therefore be relatively wide.

It is also possible, instead of adapting the width of the resistance path, to apply pastes with differing resistance values at different levels in the tank.

Resistance path 15 is accommodated preferably in a known bridge circuit (not shown) together with a reference standard resistor in a housing 19, while furthermore in two arms in the bridge circuit are accommodated compensation resistance paths 20 and 21, formed using screen print technique. to compensate for the temperature at respectively the bottom and the top of tank 3, which paths are connected onto the housing 19 via connections 22, 23, 24 and 25 and via conductors 26, 27 and 28 also printed on the PEMS material. The compensation resistors can of course also be arranged in the tank in another way. Accommodated in housing 19 for amplification of the difference signal originating from the bridge circuit is a measurement amplifier, as indicated schematically with number 29, which generates to indicator element 12 a signal which varies in linear proportion to the volume change of the material in the tank, so that the indicator element can be installed indepently of the tank.

The width of the resistance path 15 will of course be dependent on the heat transfer from resistance path 15 to carrier 6, whether or not a protective layer 18 is applied over the resistance path 15, and on the substance present in the tank 3, which may for example be fuel but is not limited to this and may therefore be water or even finegrained bulk goods for storage in a tank, whereby if required such measuring systems must then be located in several places in the tank as the filling height of such bulk material is not necessarily approximately the same in the whole tank.

## Claims

1. System for measuring the filling height of material present in a tank, comprising a sensor provided with at least one electrical conductor extending from the upper part (4) of the tank (3) to the bottom thereof and at least two electrical connections for said conductor, said conductor being a resistance path (15) formed on a rigid carrier (6) having a electrically insulating surface, and formed out of a paste having a temperature dependent resistance coefficient by means of screen print technique, characterized in that the resistance path is formed on an enamelled metal plate constituting the carrier.

2. Measuring system as claimed in claim I, characterized in that the dimensions of the resistance path (15) are adapted to the interior dimensions and the shape of the tank (3) such that the variation of the resistance value of said resistance path (15) is in linear proportion to the change in the volume of the material.

3. Measuring system as claimed in any of the foregoing claims, characterized in that the resistance path (15) is accommodated in an arm of a bridge, in the other arms of which are accommodated at least one compensation resistor (20) in the proximity of the bottom (7) of the tank (3) and at least one compensation resistor (21) in the proximity of the upper part (4) of said tank.

4. Measuring system as claimed in claim 3, characterized by a measurement amplifier (29) arranged on the upper part (4) of the tank (3) on the carrier (6).

5. Measuring system as claimed in claim 3 or 4, characterized in that the carrier can be inserted into locating means (14) at the bottom (7) of the tank (3) and can be screw fastened into said tank (3) at the top (4) using a screw connection (8, 13).

6. Sensor (6, 15) for use in a measuring system as claimed in any of the foregoing claims.

13005-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US-A-3 479 875 (RIDDEL et al.)<br>* Figures; column 3, lines 29-31; column 4, line 5 - column 5, line 17 * | 1,2,6 | G 01 F 23/24 |
| | --- | | |
| A | DE-A- 869 701 (SIEMENS & HALSKE)<br>* Page 2, lines 6-23; figures * | 1,3,5, 6 | |
| | --- | | |
| A | DE-A-2 410 264 (HÖWING)<br>* Figure 1; page 2, paragraph 1 * | 3-6 | |
| | ----- | | |

TECHNICAL FIELDS SEARCHED (Int. Cl.4)

G 01 F

The present search report has been drawn up for all claims

| Place of search | Date of completion of the search | Examiner |
|---|---|---|
| THE HAGUE | 04-09-1987 | NUIJTEN E.M. |